# EUROPEAN PATENT APPLICATION

(11) **EP 3 967 515 A1**
(43) Date of publication of application: **16.03.2022**
(21) Application number: 21194604.1
(22) Date of filing: 02.09.2021
(51) Int. Cl.: B60C 1/00, C08K 5/09

(54) **RUBBER COMPOSITION AND PNEUMATIC TIRE WITH PLANT BASED ANTIOXIDANT**

(30) Priority: 14.09.2020 US 202017019998
(71) Applicant: The Goodyear Tire & Rubber Company, Akron, Ohio 44316 (US)
(72) Inventor: SANDSTROM, Paul Harry, Cuyahoga Falls, 44223 (US)
(74) Representative: Goodyear IP Law

(57) **Abstract**

The present invention is directed to a rubber composition comprising at least one plant-based antioxidant selected from oleanolic acid and ferulic acid. The invention is further directed to a pneumatic tire comprising the rubber composition.

## Description

### Background

Pneumatic rubber tires often contain internal and external rubber components which are subject to degradation by exposure to oxygen and ozone.

Virtually all tire rubber components, particularly rubber compositions containing diene-based elastomer(s), contain antidegradants to resist degradation of the elastomer(s) by exposure to oxygen and ozone, whereas the internal components are more effected by oxygen. Such tire components include both internal and external components such as, for example, a tire tread, sidewall, apex, belt rubber coat, carcass ply rubber coat, chafer and inner liner, all of which are tire components well known to those having skill in such art. The external tire components such as, for example a tire tread, sidewall and chafer require such protection against atmospheric oxygen and ozone. Such tire components are well known to those having skill in such art.

An often used antidegradant for such purpose, which is usually suitable as both an antioxidant or antiozonant (and is more simply referred to herein as an antidegradant), is N-1,3-dimethylbutyl-N'-phenyl-p-phenylene diamine (referred to herein as "6-PPD").

In one aspect, rubber sidewalls of tires may age somewhat prematurely as a result of, for example, weathering due to atmospheric conditions including ozone, oxygen and ultraviolet light exposure, particularly rubber sidewalls composed of rubber compositions which contain a diene-based elastomer.

### Summary of the Invention

The invention relates to a rubber composition in accordance with claim 1 and to a tire in accordance with claim 8. Dependent claims refer to preferred embodiments of the invention.

The present invention is directed to a vulcanizable rubber composition comprising at least one plant-based antioxidant selected from oleanolic acid and ferulic acid. The invention is further directed to a pneumatic tire comprising the rubber composition.

### Description of Example Embodiments of the Invention

There is disclosed a vulcanizable rubber composition comprising at least one plant-based antioxidant selected from oleanolic acid and ferulic acid. There is further disclosed a pneumatic tire comprising the rubber composition.

Oleanolic acid and ferulic acid are organic compounds that may be isolated from the epiticular waxes of certain plants, such as from olive leaves and grape berry skins. See for example Heurta Navarro et al., 2018 Fall Meeting of the American Geophysical Union, Abstract No. A33L-3371, December 2018.

It has now been found that rubber compositions including one or both of oleanolic acid and ferulic acid show an improved combination of ozone resistance and tear resistance as compared with rubber compositions without these materials.

In one embodiment then the vulcanizable rubber composition includes from 0.5 to 10 phr (parts by weight, per hundred parts by weight of rubber) of at least one of oleanolic acid and ferulic acid. In one embodiment, the rubber composition includes from 0.5 to 10 phr of oleanolic acid. In one embodiment, the rubber composition includes from 0.5 to 10 phr of ferulic acid. In one embodiment, the rubber composition includes from 0.5 to 10 phr of a combination of oleanolic acid and ferulic acid.

The vulcanizable rubber composition also contains at least a natural or synthetic diene derived rubber. Representative of the rubbers include medium vinyl polybutadiene, styrene-butadiene rubber, synthetic cis-1,4-polyisoprene, synthetic 3,4 polyisoprene, natural rubber, cis-polybutadiene, styrene-isoprene rubber, styrene isoprene-butadiene rubber, acrylonitrile-butadiene rubber, carboxylated acrylonitrile-butadiene rubber, hydrogenated versions of each of the previously listed rubbers, polypentenamer, polyoctenamer and mixtures thereof. Preferably, the rubber is natural rubber, styrene-butadiene rubber or cis-polybutadiene.

It is readily understood by those having skill in the art that the vulcanizable rubber compositions used in tire components would be compounded by methods generally known in the rubber compounding art, such as mixing the various sulfurvulcanizable constituent rubbers with various commonly used additive materials such as, for example, curing aids, such as sulfur, activators, retarders and accelerators, processing additives, such as oils, resins including tackifying resins, and plasticizers, fillers, pigments, fatty acid, zinc oxide, waxes, antioxidants and antiozonants, peptizing agents and reinforcing materials such as, for example, carbon black and/or silica, including silicas pretreated with silane coupling agents. As known to those skilled in the art, depending on the intended use of the sulfur vulcanizable and sulfur vulcanized material (rubbers), the additives mentioned above are selected and commonly used in conventional amounts.

The rubber composition may contain various conventional rubber additives. Typical additions of carbon black comprise 10 to 150 parts by weight of diene rubber (phr).

A number of commercially available carbon blacks may be used. Included in the list of carbon blacks are those known under the ASTM designations N299, S315, N326, N330, M332, N339, N343, N347, N351, N358, N375, N539, N550 and N582. Such processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 10 to 150 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2 dihydro 2,2,4 trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr, or even, in some circumstances, up to 8 phr, with a range of from 3 to 5 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. Combinations of these accelerators have been known to produce a synergistic effect of the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, in a range of from 100 °C to 130 °C, which is lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140 °C and 190 °C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a sidewall or chafer.

The tire can be built, shaped, molded and cured by various methods which will be readily apparent to those having skill in such art.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The prepared tire of this invention is conventionally shaped and cured by methods known to those having skill in such art.

The invention is further illustrated by the following examples.

### Example

In this example, the use of ferolic acid and oleanolic acid in a tire sidewall rubber composition is illustrated. Four samples of a standard sidewall compound were mixed following a multi-step mix procedure. Each sample was identical except for the presence of ferulic acid and/or oleanolic acid as given in Table 1. Other standard ingredients included diene elastomers, fillers, process aids, and curatives. The four compounds were tested for various physical properties as given in Table 1, with Sample A as control and Samples B, C and D as inventive samples.

**Table 1**

| Sample | A | B | C | D |
|---|---|---|---|---|
| PPD antidegradant | 4.25 | 4.25 | 4.25 | 4.25 |
| Ferulic Acid | 0 | 2.5 | 0 | 2.5 |
| Oleanolic Acid | 0 | 0 | 2.5 | 2.5 |

| Cure properties | | | | |
|---|---|---|---|---|
| Max Torque (150°C) | 11.5 | 12 | 9.4 | 10.2 |
| Min Torque | 1.7 | 2 | 1.6 | 1.8 |
| Delta Torque | 9.8 | 10 | 7.8 | 8.4 |
| T90, minutes | 6.8 | 8 | 16.6 | 14 |

| Static Ozone, 40°C, 48hrs, 50 pphm, 25% strain | | | | |
|---|---|---|---|---|
| Crack Size, inches | 0.1 | 0.25 | 0 | 0 |
| Density, % | Edge | 38 | 0 | 0 |

| Dynamic Ozone, 40°C, 50 pphm, 25% strain | | | | |
|---|---|---|---|---|
| 3 days | No cracks | No cracks | No cracks | No cracks |
| 5 days, crack size, in | 0.01 | 0.1 | 0.01 | 0.1 |
| crack density, % | Edge | 38% | Edge | 38% |
| 10 days, crack size, in | 0.25 | 0.25 | 0.25 | Broke |
| crack density, % | 75% | 75% | 75% | - |

| Physical Properties | | | | |
|---|---|---|---|---|
| Tensile Strength, MPa | 15 | 13 | 12.2 | 12.3 |
| Elongation at Break, % | 670 | 628 | 613 | 630 |
| 100% Modulus, MPa | 1.18 | 1.04 | 1.05 | 1 |
| 300% Modulus, MPa | 5.1 | 4.4 | 4.5 | 4.3 |
| Rebound, 23°C | 58 | 59 | 55 | 54 |
| Rebound, 100°C | 69 | 69 | 66 | 67 |
| Tear @ 100°C | | | | |
| Original, N/m | 122 | 130 | 195 | 161 |

As seen in Table 1, comparing the results for the inventive samples B, C and D with control sample A, the following conclusions are apparent:
With added ferulic acid:
   Worse static and dynamic ozone resistance
   Similar tear strength
With added oleanolic acid:
   Improved static ozone and similar dynamic ozone
   Improved tear strength
With both ferulic acid and oleanolic acid:
   Improved static and worse dynamic ozone resistance Improved tear strength

## Claims

1. A vulcanizable rubber composition comprising at least one plant-based antioxidant selected from the group consisting of oleanolic acid and ferulic acid.

2. The vulcanizable rubber composition of claim 1, wherein the plant-based antioxidant is present in an amount ranging from 0.5 to 10 phr.

3. The vulcanizable rubber composition of claim 1 or 2, wherein the plant-based antioxidant comprises both oleanolic acid and ferulic acid.

4. The vulcanizable rubber composition of at least one of the previous claims, wherein the plant-based antioxidant comprises both oleanolic acid and ferulic acid and is present in an amount ranging from 0.5 to 10 phr.

5. The vulcanizable rubber composition of at least one of the previous claims, wherein the plant-based antioxidant is oleanolic acid and is present in an amount ranging from 0.5 to 10 phr.

6. The vulcanizable rubber composition of at least one of the previous claims, wherein the plant-based antioxidant is ferulic acid and is present in an amount ranging from 0.5 to 10 phr.

7. The vulcanizable rubber composition of at least one of the previous claims, wherein the plant-based antioxidant is present in an amount ranging from 2 phr to 6 phr.

8. A tire having a component, the component comprising the rubber composition in accordance with at least one of the previous claims.

9. The tire of claim 8 wherein the component is at least one of a tread, a tread cap, a tread base, a sidewall, an apex, a chafer, a sidewall insert, a wirecoat and an innerliner.

10. The tire of claim 8 or 9 wherein the tire comprises the rubber composition as a vulcanized rubber composition.

11. The tire of at least one of the claims 8 to 10 wherein the tire is a pneumatic tire.

12. The tire of at least one of the claims 8 to 10 comprising the rubber composition in the form of a tire sidewall.
